(19) Europäisches Patentamt
European Patent Office
Office européen des brevets

(11) **EP 4 729 248 A1**

(12) **EUROPÄISCHE PATENTANMELDUNG**

(43) Veröffentlichungstag:
22.04.2026 Patentblatt 2026/17

(21) Anmeldenummer: 25208923.0

(22) Anmeldetag: **15.10.2025**

(51) Internationale Patentklassifikation (IPC):
***B25J 9/16*** (2006.01)

(52) Gemeinsame Patentklassifikation (CPC):
**B25J 9/1633; B25J 9/1648;** G05B 2219/39323

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **15.10.2024 DE 102024129792**

(71) Anmelder:
• **Deutsches Zentrum für Luft- und Raumfahrt e.V.**
**53227 Bonn (DE)**

• **Technische Universität München, in Vertretung des Freistaats Bayern**
**80333 München (DE)**

(72) Erfinder:
• **Silverio, Joao Pedro Lourenco**
**82234 Weßling (DE)**
• **Mühlbauer, Maximilian Sebastian**
**82110 Germering (DE)**

(74) Vertreter: **Ege Lee & Roider Patentanwälte**
**Wilhelm-Wagenfeld-Straße 24**
**80807 München (DE)**

(54) **VERFAHREN ZUM INTERAKTIVEN KRAFTGEREGELTEN KONTROLLIEREN EINES ROBOTERS UNTER VERWENDUNG EINER PROBABILISTISCHEN GESCHWINDIGKEITSBASIERTEN VIRTUAL FIXTURE, ROBOTER UND COMPUTERPROGRAMM**

(57) Verfahren zum interaktiven kraftgeregelten Kontrollieren eines Roboters (100) unter Verwendung einer probabilistischen geschwindigkeitsbasierten Virtual Fixture, wobei das Verfahren folgende Schritte umfasst: basierend auf Demonstrationsdaten lernen wenigstens eines spezifischen probabilistischen Dynamikmodells; basierend auf dem wenigstens einen spezifischen probabilistischen Dynamikmodell berechnen wenigstens eines probabilistischen Geschwindigkeitsfelds; Verwenden einer Stabilisierungsstrategie mit einem probabilistischen Basis-Geschwindigkeitsfeld; basierend auf dem wenigstens einen probabilistischen Geschwindigkeitsfeld und dem probabilistischen Basis-Geschwindigkeitsfeld berechnen probabilistischer geschwindigkeitsbasierter Dynamen in ihren jeweiligen Koordinatensystemen; Transformieren der probabilistischen geschwindigkeitsbasierten Dynamen in eine gemeinsame Darstellung; in der gemeinsamen Darstellung Fusionieren der transformierten probabilistischen geschwindigkeitsbasierten Dynamen zu einer resultierenden Dyname, Anwenden der resultierenden Dyname auf den Roboter (100), interaktiv kraftgeregelt kontrollierbarer Roboter (100), der zum Ausführen eines derartigen Verfahrens ausgelegt und/oder angeordnet ist, und Computerprogramm zum interaktiven kraftgeregelten Kontrollieren eines Roboters (100) unter Verwendung einer probabilistischen geschwindigkeitsbasierten Virtual Fixture, das Computerprogramm Programmcodeabschnitte umfasst, mit denen ein derartiges Verfahren ausführbar ist, wenn das Computerprogramm auf einer Kontrolleinrichtung des Roboters (100) ausgeführt wird.

Fig. 2

## Beschreibung

Die Erfindung betrifft ein Verfahren zum interaktiven kraftgeregelten Kontrollieren eines Roboters unter Verwendung einer probabilistischen geschwindigkeitsbasierten Virtual Fixture. Außerdem betrifft die Erfindung einen interaktiv kraftgeregelt kontrollierbaren Roboter. Außerdem betrifft die Erfindung ein Computerprogramm interaktiven kraftgeregelten Kontrollieren eines Roboters unter Verwendung einer probabilistischen geschwindigkeitsbasierten Virtual Fixture.

Dynamische Systeme, d.h. zustandsabhängige Bewegungsmuster werden zur Lösung einer Vielzahl robotischer Problemstellungen verwendet. Bekannte Methoden wie Dynamic Movement Primitives (DMP) erlauben es dabei, das Verhalten eines Roboters aus Demonstrationen zu programmieren. Größte Einschränkung dieser Methode ist die Abhängigkeit der kodierten Bewegung von der Zeit als Zustandsvariablen, welche im Falle von Pertubationen aufwändig modifiziert werden muss. Stable Estimators of Dynamical Systems (SEDS) erlauben es, diese Abhängigkeit aufzuheben und stattdessen die aktuelle Position als Zustandsvariable zu verwenden, während weiterhin eine asymptotische Stabilität der Roboterdynamik bezüglich eines Zielpunkts gewährleistet wird. Weiterentwicklungen verringern die Konservativität der Ansätze und erlauben es somit, näher an der ursprünglich demonstrierten Dynamik zu bleiben. All diese Methoden erlauben aber nur die Konvergenz zu einem Zielpunkt. Die Berücksichtigung mehrerer Zielpunkte wurde in erweiterten Arbeiten untersucht. Diese Arbeiten unterteilen den Arbeitsraum explizit in verschiedene Policies oder wurden nur in zweidimensionalen Fällen getestet.

Die Veröffentlichung "E. Pignat und S. Calinon, "Bayesian Gaussian Mixture Model for Robotic Policy Imitation," IEEE Robotics and Automation Letters, Bd. 4, p. 4452-4458, October 2019." betrifft ein Bayes'sches Gaußsches Mischmodell für Nachahmung von Roboterstrategien. Um zu verhindern, dass ein Roboter nach einem Erlernen von Fähigkeiten durch Nachahmung einer demonstrierten Strategie die Zustände verlässt, in denen die Demonstrationen durchgeführt wurden, wird vorgeschlagen, eine Bayes'sche Methode zu verwenden, um eine Handlungsunsicherheit in jedem Zustand zu quantifizieren.

Die Veröffentlichung "M. Khoramshahi und A. Billard, "A dynamical system approach for detection and reaction to human guidance in physical human-robot interaction," Autonomous Robots, Bd. 44, p. 1411-1429, July 2020." betrifft einen dynamischen Systemansatz zur Erkennung und Reaktion auf menschliche Führung in der physischen Mensch-Roboter-Interaktion. Um für eine Führungsrolle, bei der ein Roboter externe Störungen zurückweist und sich auf eine autonome Ausführung einer Aufgabe konzentriert, und eine Folgerrolle, bei der der Roboter die Aufgabe ignoriert und menschlichen Vorgaben folgt, eine einheitliche Roboterarchitektur zu entwickeln und zum Wechseln zwischen den beiden Rollen einen Algorithmus zur Erkennung menschlicher Führung zu entwickeln, werden dynamische Systeme eingesetzt, um aufgabenspezifische Bewegungen zu erzeugen, und Admittanzkontrolle, um reaktive Bewegungen in Richtung der menschlichen Führung zu erzeugen.

Die Veröffentlichung "G. Raiola, S. S. Restrepo, P. Chevalier, P. Rodriguez-Ayerbe, X. Lamy, S. Tliba und F. Stulp, "Co-manipulation with a library of virtual guiding fixtures," Autonomous Robots, Bd. 42, p. 1037-1051, November 2017." betrifft eine Co-Manipulation mit einer Bibliothek von Virtual Fixtures zur Führung und schlägt eine Bibliothek von Führungs-Fixtures für mehrere Aufgaben vor. Es werden Methoden für Erstellung und Hinzufügung von Führungen auf der Grundlage von maschinellem Lernen, die Online-Auswahl von Führungen auf der Grundlage einer probabilistischen Implementierung von Führungs-Fixtures und die Verfeinerung bestehender Führungen auf der Grundlage einer inkrementellen Lernmethode entwickelt.

Die Veröffentlichung "M. S. Mühlbauer, F. Stulp, A. O. Albu-Schäffer und J. Silvério, "Mixture of experts on Riemannian manifolds for visual-servoing fixtures," in 2022 IEEE/RSJ International Conference on Intelligent Robots and Systems, Workshop on Probabilistic Robotics in the Age of Deep Learning, 2022." betrifft eine ExpertenMischung auf Riemannschen Mannigfaltigkeiten für Visual Servoing Fixtures. Um den Grad von Unsicherheit einer visuellen Schätzung quantifizieren zu können und ein prinzipielles Verfahren zum Hinzufügen und Entfernen von Fixtures bereit zu stellen, wenn mögliche Ziele im Arbeitsbereich eines Roboters erscheinen, wird ein onmanifold Mixture of Experts (MoE)-Modell vorgeschlagen, das Visual Servoing Fixtures synthetisiert und gleichzeitig elegant mit Unsicherheiten der vollständigen Posenerkennung und 6D-Teleoperationszielen in einem einheitlichen Rahmen umgeht.

Die Veröffentlichung "M. Mühlbauer, T. Hulin, B. Weber, S. Calinon, F. Stulp, A. Albu-Schäffer, and J. Silvério, "A probabilistic approach to multi-modal adaptive virtual fixtures", IEEE Robotics and Automation Letters, vol. 9, no. 6, pp. 5298-5305, 2024." betrifft einen probabilistischen Ansatz für multimodale adaptive virtuelle Vorrichtungen. Um eine prinzipienbasierte Methoden zum Hinzufügen/Entfernen von Fixtures, zusätzlich zu einer unsicherheitssensitiven Assistenzregelung, bereitzustellen und darüber hinaus eine Vermittlung verschiedener Modalitäten zu ermöglichen, um dem Benutzer während der gesamten Aufgabe ein optimales Feedback zu geben, wird ein Mixture-of-Experts-Modell (MoE) vorgeschlagen, das visuelle Servoing-Vorrichtungen synthetisiert und Unsicherheiten bei der vollständigen Positionserkennung und Teleoperationsziele auf elegante Weise in einem einheitlichen Rahmen behandelt. Eine Vermittlungsfunktion, die mehrere visuelle Vorrichtungen kombiniert, ergibt sich auf natürliche Weise aus der MoE-Formulierung, wobei Unsicherheiten genutzt werden, um die Steifigkeit der Vorrichtung und damit den Grad der Unterstützung zu modulieren. Die daraus resultierenden visuellen Servoing-Vorrichtungen werden dann mit positionsbasierten Vorrichtungen unter Verwendung eines Product-of-Experts-Ansatzes (PoE) verschmolzen, wodurch eine Führung im gesamten Arbeitsbereich erreicht wird.

Größter Nachteil der aktuell vorhandenen Methoden ist, dass eine Interaktion mit menschlichen Bedienpersonen nicht zeitgleich mit der Ausführung einer gelernten oder programmierten Dynamik möglich ist. Diese Interaktion ist in vielen kollaborativen Szenarien aber notwendig, wenn z.B. Aufgaben gemeinsam mit einem Roboter durchgeführt werden sollen oder wenn eine Roboterbewegung korrigiert werden soll. Weiterhin ist es mit aktuell publizierten Lösungen nicht möglich, flexibel Interaktionen mit unterschiedlichen Objekten/Aufgaben in einem Arbeitsraum zu kombinieren, bei denen z.B. unterschiedliche Zielpunkte oder unterschiedliche wiederkehrende Bewegungen ausgeführt werden sollen. Existierende Techniken berücksichtigen weiterhin nur jeweils eine Form der Robotersteuerung, z.B. mittels gelernter Dynamik oder mittels positionsbasierter Virtual Fixtures, aber nicht die Kombination daraus. Weiterhin fehlt eine Formulierung positionsbasierter automatisierter Virtual Fixtures.

Der Erfindung liegt die Aufgabe zugrunde, ein eingangs genanntes Verfahren strukturell und/oder funktionell zu verbessern. Außerdem liegt der Erfindung die Aufgabe zugrunde, einen eingangs genannten Roboter strukturell und/oder funktionell zu verbessern. Außerdem liegt der Erfindung die Aufgabe zugrunde, ein eingangs genanntes Computerprogramm strukturell und/oder funktionell zu verbessern.

Die Aufgabe wird gelöst mit einem Verfahren mit den Merkmalen des Anspruchs 1. Außerdem wird die Aufgabe gelöst mit einem Roboter mit den Merkmalen des Anspruchs 15. Außerdem wird die Aufgabe gelöst mit einem Computerprogramm mit den Merkmalen des Anspruchs 16. Vorteilhafte Ausführungen und/oder Weiterbildungen sind Gegenstand der Unteransprüche.

Das erfindungsgemäße Verfahren ist zum interaktiven kraftgeregelten Kontrollieren eines Roboters unter Verwendung einer probabilistischen geschwindigkeitsbasierten Virtual Fixture ausgelegt. Das Verfahren kann dazu ausgelegt sein, den Roboter in unterschiedlichen Betriebsmodi zu kontrollieren. Die Betriebsmodi können unterschiedliche Autonomiegrade aufweisen. Ein Betriebsmodus kann dazu ausgelegt sein, den Roboter vollständig durch eine menschliche Bedienperson zu kontrollieren. Ein Betriebsmodus kann dazu ausgelegt sein, Teile einer Aufgabe autonom durch den Roboter auszuführen und Teile der Aufgabe durch eine menschliche Bedienperson zu kontrollieren. Ein Betriebsmodus kann für einen vollständig autonomen Betrieb des Roboters ausgelegt sein. Ein Betriebsmodus kann dazu ausgelegt sein, Aufgaben auszuführen, die eine erhöhte Präzision erfordern. Ein Betriebsmodus kann dazu ausgelegt sein, den Roboter kollaborativ zu kontrollieren. Ein Betriebsmodus kann dazu ausgelegt sein, den Roboter aus der Distanz zu kontrollieren. Das Verfahren kann dazu ausgelegt sein, ein nahtloses Wechseln zwischen unterschiedlichen Betriebsmodi zu ermöglichen. "Interaktiv" bezieht sich in diesem Zusammenhang insbesondere auf ein Interagieren zwischen dem Roboter und einer menschlichen Bedienperson und/oder ein kollaboratives Ausführen einer Aufgabe. "Kontrollieren" bezeichnet vorliegend insbesondere ein steuerungstechnisches und/oder regelungstechnisches Kontrollieren. Das Verfahren kann in einem Computerprogramm implementierbar sein.

"Virtual Fixture" bezeichnet vorliegend insbesondere ein aufgabenabhängiges virtuelles Hilfsmittel, das einer realen Umgebung überlagert werden kann, um eine Bewegung einer menschlichen Bedienperson in gewünschte Richtungen zu lenken und/oder Bewegungen in unerwünschte Richtungen oder Bereiche des Roboterarbeitsraums zu verhindern. Virtual Fixtures können dazu ausgelegt sein, bei physischen Mensch-Roboter-Interaktionsaufgaben, wie Handführung, eine Steifigkeit und/oder Nachgiebigkeit des Roboters anzupassen, um eine menschliche Bedienperson beim Ausführen einer Aufgabe zu unterstützen. Virtual Fixtures können dazu ausgelegt sein, einer menschlichen Bedienperson eine Rückmeldung zu geben. Die Rückmeldung kann eine haptische Rückmeldung sein. Virtual Fixtures können auf unterschiedlichen Wahrnehmungsinformationen, beispielsweise auf positionsbasierte Messungen und/oder visuelle Messungen, basieren. Virtual Fixtures können auf Trajektorien basieren. Virtual Fixtures können Geschwindigkeiten und/oder Kräfte berücksichtigen. Virtual Fixtures können eine Beziehung zwischen Geschwindigkeiten und einem aktuellen Zustand berücksichtigen. Virtual Fixtures können Unsicherheiten, insbesondere geschätzte Unsicherheiten, berücksichtigen. "Probabilistische geschwindigkeitsbasierte Virtual Fixture" bezeichnet vorliegend insbesondere eine Virtual Fixture, die Geschwindigkeiten mit zugehörigen Unsicherheiten berücksichtigt. Die probabilistische geschwindigkeitsbasierte Virtual Fixture kann auch als dynamische Virtual Fixture bezeichnet werden.

Das erfindungsgemäße Verfahren umfasst folgende Schritte: basierend auf Demonstrationsdaten lernen wenigstens eines spezifischen probabilistischen Dynamikmodells; basierend auf dem wenigstens einen spezifischen probabilistischen Dynamikmodell berechnen wenigstens eines probabilistischen Geschwindigkeitsfelds; Verwenden einer Stabilisierungsstrategie mit einem probabilistischen Basis-Geschwindigkeitsfeld; basierend auf dem wenigstens einen probabilistischen Geschwindigkeitsfeld und dem probabilistischen Basis-Geschwindigkeitsfeld berechnen probabilistischer geschwindigkeitsbasierter Dynamen in ihren jeweiligen Koordinatensystemen; Transformieren der probabilistischen geschwindigkeitsbasierten Dynamen in eine gemeinsame Darstellung; in der gemeinsamen Darstellung Fusionieren der transformierten probabilistischen geschwindigkeitsbasierten Dynamen zu einer resultierenden Dyname, Anwenden der resultierenden Dyname auf den Roboter.

Die Demonstrationsdaten können Daten sein, die basierend auf einer Demonstration erfasst werden. Eine Demonstration kann eine Demonstration einer Aufgabenausführung, eines Bewegungsablaufs und/oder einer Trajektorie umfassen. Eine Demonstration kann durch eine menschliche Bedienperson und/oder ein automatisiertes System, wie Bewegungsplaner, erfolgen. Die Demonstrationsdaten können im Arbeitsraum des Roboters erfasst werden. Die Demonstrationsdaten können eine spezifische Aufgabe in einem spezifischen Bereich des Arbeitsraums, spezifische Zielkoordinaten, spezifische Objekte und/oder objektspezifische Koordinatensysteme umfassen. Die Demonstrationsdaten können wenigstens ein Geschwindigkeitsfeld, umfassen. Die Demonstrationsdaten können in wenigstens einem spezifischen Koordinatensystem, insbesondere objektspezifischen Koordinatensystem, erfasst werden. Die jeweiligen Koordinatensysteme können insofern auch als spezifische Koordinatensysteme bezeichnet werden. Beispielsweise können die Demonstrationsdaten im euklidischen Raum, in Zylinderkoordinaten, in Kugelkoordinaten und/oder in auf Oberflächenmeshes basierenden Koordinaten erfasst werden. Die Demonstrationsdaten können gespeichert werden. "Probabilistisches Dynamikmodell" bezeichnet vorliegend insbesondere ein Modell, das eine Beziehung zwischen Geschwindigkeiten mit zugehörigen Unsicherheiten und einem aktuellen Zustand berücksichtigt. Das wenigstens eine spezifische probabilistische Dynamikmodelle kann nicht-parametrisch gelernt werden, insbesondere basierend auf Gaußschen Prozessen oder Kernelized Movment Primitives.

Das wenigstens eine probabilistische Geschwindigkeitsfeld kann basierend auf aktuellen Endeffektorposen berechnete Sollgeschwindigkeitsvektoren und zugehörige Unsicherheitsschätzungen umfasst. Unsicherheitsschätzungen können mithilfe von Kovarianzmatrizen dargestellt werden. Die Unsicherheitsschätzungen können außerhalb des Bereichs, in dem das Dynamikmodell gelernt wurde, zunehmen.

Die Stabilisierungsstrategie kann dazu ausgelegt sein, ein Verlassen des Bereichs, in dem das Dynamikmodell gelernt wurde, zu verhindern und/oder den Roboter in den Bereich, in dem das Dynamikmodell gelernt wurde, zurückzuführen. Das probabilistische Basis-Geschwindigkeitsfeld kann Basisgeschwindigkeitsvektoren in Richtung einer nächstgelegenen Pose und eine konstante Unsicherheitsschätzung zurückgeben. Dazu kann der mögliche Abstand zu Referenzposen des wenigstens einen probabilistischen Geschwindigkeitsfelds berechnet werden, um die nächstgelegene Pose einer bekannten Dynamik zu erhalten.

Dynamen können auch als wrenches bezeichnet werden. Dyname oder wrench beschreibt nach Wahl eines Bezugspunkts ein Kräftesystem durch ein statisch äquivalentes Paar aus Resultierende und Drehmoment. Basierend auf dem wenigstens einen probabilistischen Geschwindigkeitsfeld kann wenigstens eine probabilistische geschwindigkeitsbasierte Dyname berechnet werden. Bei mehreren probabilistischen Geschwindigkeitsfeldern kann für jedes probabilistische Geschwindigkeitsfeld eine probabilistische geschwindigkeitsbasierte Dyname berechnet werden. Sowohl für das wenigstens eine probabilistische Geschwindigkeitsfeld als auch für das probabilistische Basis-Geschwindigkeitsfeld kann eine probabilistische geschwindigkeitsbasierte Dyname berechnet werden. Die probabilistischen geschwindigkeitsbasierten Dynamen können jeweils im spezifischen Koordinatensystem des zugrundeliegenden wenigstens einen Geschwindigkeitsfelds oder Basis-Geschwindigkeitsfelds berechnet werden. Die probabilistischen geschwindigkeitsbasierten Dynamen können basierend auf aktuellen Endeffektorgeschwindigkeit berechnet werden. Zum Berechnen der probabilistischen geschwindigkeitsbasierten Dynamen kann ein proportionales Regelgesetz verwendet werden. Das Regelgesetz kann eine Verstärkungsmatrix umfassen. Die Verstärkungsmatrix kann Proportionalitätsfaktoren umfassen. Die Verstärkungsmatrix kann Proportionalitätsfaktoren im jeweils spezifischen Koordinatensystem umfassen.

Zum Berechnen der probabilistischen geschwindigkeitsbasierten Dynamen kann das proportionales Regelge-setz

$$w_{\mathrm{VF},j} = K_{\mathrm{VF},j} \cdot (v_{\mathrm{VF},j} - v_{\mathrm{ee}})$$

verwendet werden, das mit der 6-dimensionalen Endeffektorgeschwindigkeit $v_{\mathrm{ee}}$, der Geschwindigkeit $v_{\mathrm{VF},j}$ des wenigs-tens einen Geschwindigkeitsfelds und des Basis-Geschwindigkeitsfelds und der $6 \times 6$ Verstärkungsmatrix $K_{\mathrm{VF},j}$ die 6-dimensionale Dyname $w_{\mathrm{VF},j}$ generiert.

Die gemeinsame Darstellung kann dazu ausgelegt sein, eine Fusion der wenigstens einen basierend auf dem wenigstens einen probabilistischen Geschwindigkeitsfeld berechneten Dyname und der basierend auf dem probabilistischen Basis-Geschwindigkeitsfeld berechneten Dyname zu ermöglichen. Die gemeinsame Darstellung kann roboterunabhängig sein. Zur gemeinsamen Darstellung und Fusion können die geschwindigkeitsbasierten Dynamen mit der Jacobimatrix des jeweiligen Koordinatensystems über jeweilige Tangentenräume zu kartesischen geschwindigkeitsbasierten Dynamen transformiert werden.

Die geschwindigkeitsbasierte Dyname $w_{\mathrm{VF},i}$ kann in den Tangentialraum von $\mathbb{R}^3 \times \mathcal{S}^3$, das als Produkt aus dem dreidimensionalen euklidischen Raum und der Einheitsquaternion-Mannigfaltigkeit eine vollständige Pose ausdrückt, an der aktuellen Endeffektorpose $x_{\mathrm{ee}}$ transformiert werden, mit

$$w_{\mathrm{VF},i,cart} = J_{i,\mathrm{man}}^{T} w_{\mathrm{VF},i,\mathrm{man}}$$

mit der Mannigfaltigkeits-Jacobimatrix $J_{i,\mathrm{man}} = \frac{\partial x_{\mathrm{ee},i,\mathrm{man}}}{\partial x_{\mathrm{ee,cart}}}$. Die zugehörigen Unsicherheitsschätzungen können analog umgerechnet werden, mit

$$\Sigma_{\mathrm{VF},i,cart} = J_{i,\mathrm{man}}^{-1} \Sigma_{\mathrm{VF},i,\mathrm{man}} J_{i,\mathrm{man}}^{-1}{}^{T}$$

Diese Transformation berücksichtigt die Eigenschaften der einzelnen Dyname und Kovarianzmatrix bis zum linearen Element. Für die Kovarianzmatrix entspricht dieser Vorgang einer Kongruenztransformation eines (0, 2)-Tensors. Die Dyname $w_{\mathrm{VF},i,cart}$ im Tangentialraum von $\mathbb{R}^3 \times \mathcal{S}^3$ drückt die Kräfte der Dyname in Ursprungskoordinaten aus.

Da die Drehmomente in lokalen Werkzeugkoordinaten erwartet werden, kann die endgültige geschwindigkeitsbasierte Dyname $w_{\mathrm{VF},i}$, die am Endeffektor befohlen werden soll, vom Tangentialraum von $\mathbb{R}^3 \times \mathcal{S}^3$ nach se(3) unter Verwendung von

$$w_{\mathrm{VF,i,SE3}} = \begin{pmatrix} R_{\mathrm{ee}}^{T} & 0 \\ 0 & I \end{pmatrix} w_{\mathrm{VF,i,cart}},$$

transformiert werden, wobei $R_{\mathrm{ee}}$ die Rotation von $x_{\mathrm{ee}}$ im spezifischen Koordinatensystem des zugrundeliegenden wenigstens einen Geschwindigkeitsfelds oder Basis-Geschwindigkeitsfelds ausdrückt. Die gleiche Rotation kann auch auf die zugehörige Unsicherheitsschätzung oder Kovarianzmatrix angewendet werden:

$$\Sigma_{\mathrm{VF,i,SE3}} = \begin{pmatrix} R_{\mathrm{ee}}^{T} & 0 \\ 0 & I \end{pmatrix} \Sigma_{\mathrm{VF,i,cart}} \begin{pmatrix} R_{\mathrm{ee}}^{T} & 0 \\ 0 & I \end{pmatrix}^{T}$$

Die ausgerichteten kartesischen Dynamen- und Kovarianzmatrizen können dann wie in der Veröffentlichung "Mühlbauer, M., Hulin, T., Weber, B., Calinon, S., Stulp, F., Albu-Schäffer, A., & Silvério, J. (2024). A Probabilistic Approach to Multi-Modal Adaptive Virtual Fixtures. IEEE Robotics and Automation Letters." verwendet werden, um eine Vermittlungs-Dyname

$$\hat{w}_{\mathrm{VF}} = \arg \min_{w_{\mathrm{VF}}} \sum_{j=1}^{P} \left| (w_{\mathrm{VF}} - \mu_{\mathrm{VF},j})^{\top} \Sigma_{\mathrm{VF},j}^{-1} (w_{\mathrm{VF}} - \mu_{\mathrm{VF},j}) \right.$$

als Ergebnis der Optimierung zu berechnen.

Die transformierten geschwindigkeitsbasierten Dynamen und umgerechneten zugehörigen Unsicherheitsschätzungen können mittels eines Product of Experts zu einer resultierenden Dyname

$$\hat{w}_{\mathrm{VF}} = \hat{\Sigma}_{\mathrm{VF}} \sum_{j=1}^{P} \Sigma_{\mathrm{VF},j}^{-1} w_{\mathrm{VF},j}, \quad \hat{\Sigma}_{\mathrm{VF}} = \left( \sum_{j=1}^{P} \Sigma_{\mathrm{VF},j}^{-1} \right)^{-1}$$

fusioniert werden.

Die resultierende kartesische Dyname $\hat{w}_{\mathrm{VF}}$ kann dann unter Annahme eines schwerkraftkompensierten, drehmomentgesteuerten Manipulators gemäß

$$\tau = J^{\top} w_{\mathrm{VF}}$$

in Drehmomentsollwerte $\tau$ umgerechnet und auf den Roboter angewendet werden.

Beim Kontrollieren eines Roboters mit variabler Impedanz kann eine Skalierung der Steifigkeitsmatrix gemäß einer Präzisionsmatrix $P_{VF,i} = \Sigma_{VF,i}^{-1}$ die Zuweisung einer hohen nominalen Steifigkeit zu Richtungen mit hoher Sicherheit ermöglichen, während eine geringe Sicherheit zu einer geringeren Steifigkeit führt. Um in Steifigkeitsmatrizen auch translatorische und rotatorische Freiheitsgrade und deren Koppelung zu berücksichtigen, kann ausgehend von der Präzisionsmatrix eine resultierende Steifigkeitsmatrix

$$K = \sum_{i=1}^{6} K_i$$

berechnet und im Impedanzregler des Roboters verwendet werden.

Die probabilistische geschwindigkeitsbasierte Virtual Fixture kann mit einer probabilistischen positionsbasierten Trajektorien-Fixture kombiniert werden. "Probabilistische positionsbasierte Trajektorien-Fixture" bezeichnet vorliegend insbesondere eine Virtual Fixture, die auf Trajektorien basiert und zugehörige Unsicherheiten berücksichtigt.

Die Dyname der positionsbasierten Virtual Fixture kann mit

$$w_{VF,j} = K_{VF,j} \mathrm{Log}_{x_{ee}}(x_{VF})$$

berechnet werden, wobei $x_{ee}$ die Lage des Endeffektors, $K_{VF,j}$ und $x_{VF,j}$ die Steifigkeit und der Attraktorpunkt der j-ten Fixture sind. $\mathrm{Log}_{x_{ee}}(x_{VF})$ bezeichnet die mannigfaltige logarithmische Abbildung von $x_{VF}$ bei $x_{ee}$, die das mannigfaltigkeitsbezogene Äquivalent zur euklidischen Abbildung $x_{VF,j}$ - $x_{ee}$ ist und eine Berücksichtigung der Orientierung sowie unterschiedlicher Geometrien ermöglicht.

Eine von der probabilistischen positionsbasierten Trajektorien-Fixture ausgegebene positionsbasierte Dyname mit zugehöriger Unsicherheitsschätzung kann in die gemeinsame Darstellung transformiert werden. Die Transformation der positionsbasierte Dyname und der zugehörigen Unsicherheitsschätzung in die gemeinsame Darstellung kann entsprechend der Transformation der geschwindigkeitsbasierten Dynamen und der zugehörigen Unsicherheitsschätzungen mit der Jacobimatrix des jeweiligen Koordinatensystems zu einer kartesischen Dyname erfolgen. Die positionsbasierte Dyname kann eine geringere geschätzte Unsicherheit, darstellbar mit einer Kovarianzmatrix $\Sigma_{PB}$, als die gelernten probabilistischen Dynamiken aufweisen und damit in dem Bereich, in dem sie definiert ist, die Führung der menschlichen Bedienperson übernehmen.

Die Unsicherheitsschätzung, darstellbar mit einer Kovarianzmatrix $\Sigma_{PB}$, kann für eine nachfolgende Berechnung einer fusionierbaren Vermittlungs-Dyname und der resultierenden Dyname verwendet werden.

Die Kovarianzmatrix $\Sigma_{PB}$ nur vom nächstgelegenen Punkt der Trajektorie abhängig sein, ohne Berücksichtigung der Entfernung von der Trajektorie. Dies kann zu großen Dynamen $w_{PB}$ führen, wenn die Lage des Endeffektors $x_{ee}$ weit von der Fixture entfernt ist, auch wenn die Trajektorie für die aktuelle Roboterposition möglicherweise nicht mehr gültig ist. Die ursprüngliche Kovarianzausgabe der Fixture kann daher durch eine lineare distanzbasierte Skalierung der Präzisionsmatrix $P_{PB} = \Sigma_{PB}^{-1}$ angepasst werden zu

$$\hat{P}_{PB} = s \cdot P_{PB}$$

unter Verwendung von

$$s = \begin{cases} 1, & d < d_{\min} \\ 1 - \frac{d - d_{\min}}{d_{\max} - d_{\min}}, & d_{\min} \leq d \leq d_{\max} \\ 0, & d > d_{\max} \end{cases}$$

mit dem Mahalonobis-Abstand

$$d = \sqrt{\mathrm{Log}_{ee}(x_{PB}^T) P_{PB} \mathrm{Log}_{ee}(x_{PB})}.$$

Die Faktoren $d_{\min}$ und $d_{\max}$ bestimmen, wo die Skalierung mit der Nullsteifigkeit der Fixture beginnt bzw. endet. Die Verwendung der Mahalonobis-Distanz berücksichtigt den Einfluss bestimmter Freiheitsgrade, sodass die Fixture in Richtungen mit hoher Unsicherheit länger aktiv bleibt.

In der gemeinsamen Darstellung kann die transformierte positionsbasierte Dyname mit transformierter zugehöriger Unsicherheitsschätzung mit den transformierten probabilistischen geschwindigkeitsbasierten Dynamen und gegebenenfalls Dynamen weiterer Fixtures zu einer resultierenden Dyname fusioniert werden.

Die probabilistische positionsbasierte Trajektorien-Fixture kann von einer menschlichen Bedienperson kontrolliert oder automatisiert werden. Zum Automatisieren der probabilistischen positionsbasierten Trajektorien-Fixture kann eine bevorzugte Richtung entlang der Trajektorie abgeleitet und die probabilistische positionsbasierte Dyname berechnet werden. Die aktuelle Richtung der Fixture kann zu

$$\delta = \mathrm{Log}_{\boldsymbol{x_{i-1}}} \boldsymbol{x_i}$$

berechnet und anschließend zu

$$\delta_{\mathrm{norm}} \;=\; \tfrac{\delta}{\|\delta\|}$$

normalisiert werden.

Zum Berechnen der Automatisierungs-Dyname $w_{\mathrm{PB,aut}}$ kann das oben beschriebene proportionale Regelgesetz verwendet werden. Die resultierende Dyname der positionsbasierten Trajektorien-Fixture kann dann zu

$$w_{\mathrm{PB}} = w_{\mathrm{PB,imp}} + w_{\mathrm{PB,aut}}$$

berechnet werden.

Die probabilistische geschwindigkeitsbasierte Virtual Fixture kann mit einer probabilistischen bildbasierten Virtual Fixture kombiniert werden. "Probabilistische bildbasierte Virtual Fixture" bezeichnet vorliegend insbesondere eine Virtual Fixture, die auf visuellen Informationen basiert und zugehörige Unsicherheiten berücksichtigt. Die visuellen Informationen können von einem Bildsensor extrahiert sein.

Die bildbasierte Virtual Fixture kann auch als visual servoing Virtual Fixture bezeichnet werden und den Attraktorpunkt auf Grundlage der visuellen Eingabe

$$\boldsymbol{x}_{\mathrm{VS}}, \Sigma_{\mathrm{VS}} = f(\mathrm{I})$$

modellieren.

Die bildbasierte Virtual Fixture kann eine Kombination von $M_{\mathrm{VS}}$ einzelnen Fixtures für jede visuelle Erkennung $p_m$ $(x_{\mathrm{VS}}|x_{\mathrm{ee}}) = \mathcal{N}\,(x_{\mathrm{VS}}|\mu_m,\,\Sigma_m)$ auf Grundlage der aktuellen Endeffektor-Position $x_{\mathrm{ee}}$ berechnen. Um die visuellen Erkennungen zu fusionieren und eine probabilistische unimodale Attraktorpose

$$p(\boldsymbol{x}_{\mathrm{VS}}|\boldsymbol{x}_{\mathrm{ee}}) = \sum_{m=1}^{M_{\mathrm{VS}}} \hat{h}_m(\boldsymbol{x}_{\mathrm{ee}}, \boldsymbol{\mu}_m) p_m(\boldsymbol{x}_{\mathrm{VS}}|\boldsymbol{x}_{\mathrm{ee}})$$

auszugeben, kann eine Expertenmischung (Mixture of Experts, MoE) verwendet werden. Die Gating-Funktion $h_m$ berechnet den Einfluss jedes Experten durch

$$h_m(\boldsymbol{x}_{\mathrm{ee}}, \boldsymbol{\mu}_m) = \exp\left(-\frac{1}{2}\mathrm{Log}_{\boldsymbol{x_{ee}}}(\boldsymbol{\mu}_m)^{\top} L \,\mathrm{Log}_{\boldsymbol{x_{ee}}}(\boldsymbol{\mu}_m)\right) + \gamma$$

wobei der Hyperparameter $L = \mathrm{diag}(l_0^2, l_1^2, l_2^2, l_{wx}^2, l_{wy}^2, l_{wz}^2)^{-1}$ es erlaubt, die Relevanz jeder Richtung zu spezifizieren, und $\gamma$ ein Regularisierungsfaktor ist. Bei großer Entfernung von allen visuellen Erkennungen bewirkt $\gamma$ für jeden Experten gleiche Gewichtungen, was die Gesamtunsicherheit aller visuellen Erkennungen widerspiegelt. Durch die Verwendung des Logarithmus der Mannigfaltigkeit lässt sich diese Formulierung natürlich auf andere Mannigfaltigkeiten übertragen. Die Experten können geometrisch angepasst werden.

Eine von der probabilistischen bildbasierten Virtual Fixture ausgegebene bildbasierte Dyname mit zugehöriger Unsicherheitsschätzung kann in die gemeinsame Darstellung transformiert werden. Die Transformation der bildbasierten Dyname und der zugehörigen Unsicherheitsschätzung in die gemeinsame Darstellung kann entsprechend der Transformation der geschwindigkeitsbasierten Dynamen und der zugehörigen Unsicherheitsschätzungen mit der Jacobimatrix des jeweiligen Koordinatensystems zu einer kartesischen Dyname erfolgen.

In der gemeinsamen Darstellung kann die transformierte bildbasierte Dyname mit transformierter zugehöriger Unsicherheitsschätzung mit den transformierten probabilistischen geschwindigkeitsbasierten Dynamen und gegebenenfalls Dynamen weiterer Fixtures zu einer resultierenden Dyname fusioniert werden.

Zunächst kann das wenigstens eine spezifische probabilistische Dynamikmodell gelernt werden. Das gelernte Dynamikmodell kann dann verwendet werden, um live und/oder in Echtzeit die probabilistischen geschwindigkeitsbasierten Dynamen, die probabilistische positionsbasierte Dyname und/oder die probabilistische bildbasierte Dyname in ihren jeweiligen Koordinatensystemen zu berechnen, die Dynamen in eine gemeinsame Darstellung zu transformieren und/oder die Dynamen zu einer resultierenden Dyname zu fusionieren.

Der erfindungsgemäße interaktiv kraftgeregelt kontrollierbare Roboter ist zum Ausführen der erfindungsmäßen Verfahrens ausgelegt und/oder angeordnet. Der Roboter kann dazu ausgelegt und/oder angeordnet sein, ein Ausführen einer Aufgabe oder eines Teils einer Aufgabe durch eine menschliche Bedienperson zu ermöglichen. Der Roboter kann dazu ausgelegt und/oder angeordnet sein, eine menschliche Bedienperson beim Ausführen einer Aufgabe oder eines Teils einer Aufgabe zu unterstützen. Der Roboter kann ein mobiler Roboter sein. Der Roboter kann ein kollaborativer Roboter sein. Der Roboter kann ein Teleroboter sein. Der Roboter kann ein Industrieroboter, ein Erkundungsroboter oder ein Medizinroboter sein. Der Roboter kann Kinematiken aufweisen. Der Roboter kann Gelenke und Glieder aufweisen. Der Roboter kann Aktuatoren und Sensoren aufweisen. Der Roboter kann eine Kamera aufweisen. Der Roboter kann eine Ein- und/oder Ausgabeeinrichtung für eine menschlichen Bedienperson aufweisen. Die Ein- und/oder Ausgabeeinrichtung kann auch als Benutzerschnittstelle bezeichnet werden. Die Ein- und/oder Ausgabeeinrichtung kann dazu ausgelegt sein, den Roboter kraftgeregelt bzw. impedanzgeregelt zu kontrollieren. Die Ein- und/oder Ausgabeeinrichtung kann eine haptische Schnittstelle oder Kraftschnittstelle sein. Der Roboter kann eine elektrische Kontrolleinrichtung aufweisen. Die Kontrolleinrichtung kann wenigstens einen Prozessor, wenigstens einen Arbeitsspeicher, wenigstens einen Datenspeicher und/oder wenigstens eine Signalschnittstelle aufweisen. Die Kontrolleinrichtung und die Ein- und/oder Ausgabeeinrichtung können miteinander signalübertragend verbunden sein. Die Kontrolleinrichtung kann dazu ausgelegt und/oder angeordnet sein, das erfindungsgemäße Computerprogramm auszuführen.

Das erfindungsgemäße Computerprogramm ist interaktiven kraftgeregelten Kontrollieren des erfindungsgemäßen Roboters unter Verwendung einer probabilistischen geschwindigkeitsbasierten Virtual Fixture ausgelegt und umfasst Programmcodeabschnitte, mit denen das erfindungsgemäße Verfahren ausführbar ist, wenn das Computerprogramm auf einer Kontrolleinrichtung des Roboters ausgeführt wird. Das erfindungsgemäße Verfahren kann in dem Computerprogramm implementiert sein. Das Computerprogramm kann auf einer Kontrolleinrichtung des Roboters installierbar und/oder ausführbar sein. Das Computerprogramm kann als Computerprogrammprodukt vorliegen. Das Computerprogramm kann auf einem Datenträger vorliegen. Das Computerprogramm kann als installierbare und/oder ausführbare Programmdatei vorliegen. Das Computerprogramm kann dazu ausgelegt sein, in einen Arbeitsspeicher einer Kontrolleinrichtung des Roboters geladen und/oder mithilfe der Kontrolleinrichtung ausgeführt zu werden.

Zusammenfassend und mit anderen Worten dargestellt ergibt sich somit durch die Erfindung unter anderem eine Methode zur nutzerinteraktiven Robotersteuerung mittels probabilistischer Dynamik und Kombination mit positions- und kamerabasierten automatisierten Virtual Fixtures.

Die Erfindung betrifft ein kollaboratives Robotersystem, welches über eine Kraftschnittstelle gesteuert werden kann. Mittels Demonstrationen eines menschlichen Bedienperson oder eines automatisierten Systems, z.B. per Bewegungsplaner, können Geschwindigkeitsfelder im Arbeitsraum aufgenommen und gemeinsam mit Zielkoordinaten bzw. Objekten abgespeichert werden. Diese können dann in objektspezifischen Koordinatensystemen abgespeichert werden, z.B. im euklidischen Raum, in Zylinder- oder Kugelkoordinaten oder in Koordinaten basierend auf Oberflächenmeshes. Aus diesen Geschwindigkeitsfeldern können individuelle Modelle, basierend auf z.B. Gaussian Processes oder Kernelized Movement Primitives gelernt werden. Diese Modelle können genutzt werden, um auf Basis der aktuellen Endeffektorposition eine Sollgeschwindigkeit sowie eine zugehörige Kovarianzmatrix zu lernen. Wichtige Eigenschaft dieser Kovarianzmatrix ist, dass die Unsicherheitsschätzung außerhalb des Bereichs der gelernten Dynamiken zunimmt; entsprechend können auch andere Lernverfahren genutzt werden, welche dieselben Eigenschaften aufweisen. Weiteres Element kann ein Basis-Geschwindigkeitsfeld sein, welches Geschwindigkeitsvektoren in Richtung der Punkte der jeweils nächsten Dynamik sowie eine konstante Unsicherheitsschätzung zurückgibt. Dieses Geschwindigkeitsfeld stellt sicher, dass der Roboter bei Perturbationen in den Bereich der bekannten Dynamiken zurückgeführt wird. Gleichzeitig ist dieses Geschwindigkeitsfeld so bemessen, dass der Roboterarm bewegt wird, es aber für eine menschliche Bedienperson einfach möglich ist, den Roboter entgegen des Geschwindigkeitsfelds zu bewegen.

Die Interaktion einer menschlichen Bedienperson mit diesen Geschwindigkeitsfeldern kann über eine kraftbasierte Regelung auf dem Koordinatensystem für die Fixture sichergestellt werden mit einer 6 x 6-Matrix, welche die Proportionalitätsfaktoren enthält, also welche Kraft aus welcher Geschwindigkeitsdifferenz resultiert. Diese Faktoren sollen so bemessen sein, dass eine Roboterbewegung sichergestellt ist, aber gleichzeitig keine für die menschlichen Bedienperson unbeherrschbaren Kräfte entstehen. Diese Matrix kann dabei im jeweiligen Koordinatensystem der Dynamik angegeben sein, also z.B. in kartesischen, Zylinder- oder Kugelkoordinaten. Die Kraftberechnung kann für jedes Geschwindigkeitsfeld, also sowohl die gelernten Geschwindigkeitsfelder als auch das Basis-Geschwindigkeitsfeld, individuell ausgeführt werden.

In einem finalen Schritt können die Kraftvektoren über die Jakobimatrix des jeweiligen Koordinatensystems zu kartesischen Kraftvektoren umgerechnet werden. Analog können auch die Unsicherheitsschätzungen umgerechnet werden. Diese finalen kartesischen Kraftvektoren lassen sich dann mittels eines Products of Experts kombinieren, welches auf den Roboter appliziert werden kann. Diese Kombination der Kraftvektoren berücksichtigt die individuellen komponentenweisen Unsicherheiten der einzelnen Geschwindigkeitsfelder, sodass für jede Kraftkomponente die optimale Kraft berechnet werden kann. Daraus ergibt sich, dass außerhalb von bekannten Dynamiken das Basis-Geschwindigkeitsfeld zum Tragen kommt und den Roboter zu bekannten Dynamiken zurückführt. In Bereichen, in denen sich zwei Dynamiken überlappen, kann die Dynamik mit der geringeren Unsicherheit übernehmen.

An dieser Stelle können auch Kräfte, welche von bekannten probabilistische positions- und kamerabasierten Virtual Fixtures generiert werden, mit den gelernten Dynamiken fusioniert werden. Diese Fixtures erzeugen einen Kraftvektor, welcher wie oben mittels der Jacobimatrix umgerechnet werden kann. Auch die zugehörige Kovarianzmatrix kann mittels dieser Jacobimatrix transformiert werden. Da diese Fixtures deutlich geringere Kovarianzwerte als die gelernten probabilistischen Dynamiken haben, übernehmen sie die Führung des menschlichen Bedieners im Bereich, in welchem sie definiert sind. Da die Kovarianz dieser Fixtures nur vom aktuell nächsten Punkt auf der Fixture, nicht aber von der Entfernung des Roboters von der Fixture abhängen, ist eine Erweiterung der Kovarianz notwendig, wobei ein exponentieller Abstand berechnet werden kann unter Berücksichtigung des minimalen Abstands des Endeffektors mit einer Totzone.

Diese positionsbasierte Fixture kann entweder rein über den Nutzer gesteuert werden oder automatisiert werden. Für die Automatisierung kann die Richtung der Fixture extrahiert und ein Geschwindigkeitsregler analog der Geschwindigkeitsregelung für die Dynamiken entsprechend der Richtung angewandt werden. Der finale Kraftvektor kann auf Drehmomentsollwerte des Roboters umgerechnet werden.

Zu weiteren technischen Merkmalen der vorliegenden Erfindung wird auf die Veröffentlichungen

"E. Pignat und S. Calinon, "Bayesian Gaussian Mixture Model for Robotic Policy Imitation," IEEE Robotics and Automation Letters, Bd. 4, p. 4452-4458, October 2019. ",

"M. Khoramshahi und A. Billard, "A dynamical system approach for detection and reaction to human guidance in physical human-robot interaction," Autonomous Robots, Bd. 44, p. 1411-1429, July 2020.",

"G. Raiola, S. S. Restrepo, P. Chevalier, P. Rodriguez-Ayerbe, X. Lamy, S. Tliba und F. Stulp, "Co-manipulation with a library of virtual guiding fixtures," Autonomous Robots, Bd. 42, p. 1037-1051, November 2017.",

"M. S. Mühlbauer, F. Stulp, A. O. Albu-Schäffer und J. Silvério, "Mixture of experts on Riemannian manifolds for visual-servoing fixtures," in 2022 IEEE/RSJ International Conference on Intelligent Robots and Systems, Workshop on Probabilistic Robotics in the Age of Deep Learning, 2022.",

"S. Schaal, J. Peters, J. Nakanishi und A. Ijspeert, "Learning Movement Primitives," in Robotics Research. The Eleventh International Symposium, Berlin, 2005."

"S. M. Khansari-Zadeh und A. Billard, "Learning Stable Nonlinear Dynamical Systems With Gaussian Mixture Models," IEEE Transactions on Robotics, Bd. 27, pp. 943-957, 2011.",

"H. C. Ravichandar, I. Salehi und A. P. Dani, "Learning Partially Contracting Dynamical Systems from Demonstrations.," in CoRL, 2017.",

"V. Sindhwani, S. Tu und M. Khansari, "Learning Contracting Vector Fields For Stable Imitation Learning," 13 April 2018.",

"A. Shukla und A. Billard, "Augmented-SVM: Automatic space partitioning for combining multiple non-linear dynamics," in Advances in Neural Information Processing Systems, 2012.",

"B. Fichera und A. Billard, "Linearization and identification of multiple-attractor dynamical systems through Laplacian eigenmaps," J. Mach. Learn. Res., Bd. 23, January 2022.",

"C. K. I. Williams und C. E. Rasmussen, Gaussian processes for machine learning, Bd. 2, MIT press Cambridge, MA, 2006.",

"Y. Huang, L. Rozo, J. Silvério und D. G. Caldwell, "Kernelized movement primitives," The International Journal of Robotics Research, Bd. 38, pp. 833-852, 2019." und

"K. Hagmann, A. Hellings-Kuss, F. Steidle, F. Stulp, D. Leidner, and J. Klodmann, "Continuous transitions between levels of autonomy based on virtual fixtures for surgical robotic systems," 2024 IEEE/RSJ International Conference on Intelligent Robots and Systems, IROS 2024."

"M. Mühlbauer, T. Hulin, B. Weber, S. Calinon, F. Stulp, A. Albu- Schäffer, and J. Silvério, "A probabilistic approach to multi-modal adaptive virtual fixtures", IEEE Robotics and Automation Letters, vol. 9, no. 6, pp. 5298-5305, 2024."

verwiesen, deren Merkmale auch zur Lehre der vorliegenden Erfindung gehören und die vollständig in die Offenbarung der vorliegenden Erfindung einbezogen sind.

Die Erfindung ermöglicht eine Kombination bzw. Fusion mehrerer Dynamiken in einem Arbeitsraum. Dabei kann auch mehr als nur eine Objektgeometrie berücksichtigt werden, sodass jede Dynamik für das Objekt charakteristische Eigenschaften behalten kann. Der Regelungsansatz erlaubt eine Interaktion mit der menschlichen Bedienperson, sodass die Bewegung entweder automatisiert ausgeführt werden kann, die menschliche Bedienperson direkt mit dem Roboter interagieren kann oder die menschliche Bedienperson teleoperiert in die Robotersteuerung eingreifen kann. Insbesondere der bilaterale Teleoperationsansatz, bei welchem die menschliche Bedienperson über ein haptisches Eingabegerät in die Ausführung der Dynamik eingreifen kann und dabei die auf den Roboter wirkenden Kräfte, welche von der Ausführung der Dynamik wie auch der Umgebung kommen können, übermittelt bekommt, eröffnet eine Vielzahl neuer Anwendungsfelder. Komplexe Dynamiken können damit auch auf weit entfernten Robotersystemen, z.B. im Weltraum ausgeführt werden, während die menschliche Bedienperson immer noch eine direkte Eingriffsmöglichkeit hat. Die probabilistische Kombination bzw. Fusion mit positions- und bildbasierten Fixtures erlaubt weiterhin eine erhöhte Genauigkeit in Teilbereichen des Arbeitsraums, welche dies erfordern. Dabei kann sowohl eine automatisierte Variante genutzt werden, in welcher das System die Aufgabe selbstständig ausführt, als auch eine halbautomatisierte Variante, in welcher das System bei Erreichen einer solchen Fixture zwingend eine Nutzerinteraktion z.B. per bilateraler Teleoperation erfordert.

Nachfolgend wird ein Ausführungsbeispiel der Erfindung unter Bezugnahme auf Figuren näher beschrieben, dabei zeigen schematisch und beispielhaft:

Fig. 1    einen Roboter mit einem haptischen Interface und eine Bedienperson,

Fig. 2    eine Implementierung eines Verfahrens mittels kollaborativem Roboter und Krafteingabegerät,

Fig. 3    Koordinatensysteme für die gelernten Dynamiken und

Fig. 4    eine Automatisierung von positionsbasierten Virtual Fixtures.

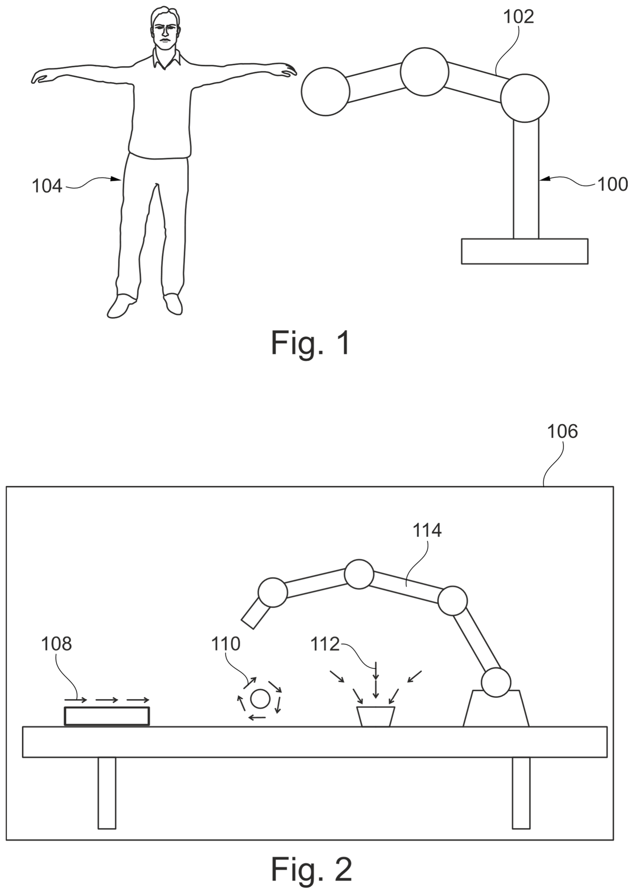

Fig. 1 zeigt einen Roboter 100 mit einem haptischen Interface 102 und eine Bedienperson 104. Fig. 2 zeigt eine Implementierungsmöglichkeit eines Verfahrens zum interaktiven kraftgeregelten Kontrollieren des Roboters 100 unter Verwendung einer probabilistischen geschwindigkeitsbasierten Virtual Fixture.

Der kollaborative Roboter 100 wird in einem Arbeitsbereich 106 von drei verschiedenen probabilistischen Dynamiken 108, 110, 112 gesteuert, welche unterschiedliche Aufgaben im Arbeitsbereich 106 ausführen. Die Bedienperson 104 kann dabei entweder direkt den Roboterarm 114 greifen und dadurch ins System eingreifen oder alternativ über das haptische Interface 102 die Roboterbewegung steuern. Das haptische Interface 102 wird dabei entsprechend der Roboterbewegung bewegt; Kräfte, die auf den Roboter 100 wirken, werden vom Interface 102 an die Bedienperson 104 weitergegeben und Kräfte welche die Bedienperson 104 auf das Interface 102 ausübt, werden auf den Roboter 100 übertragen.

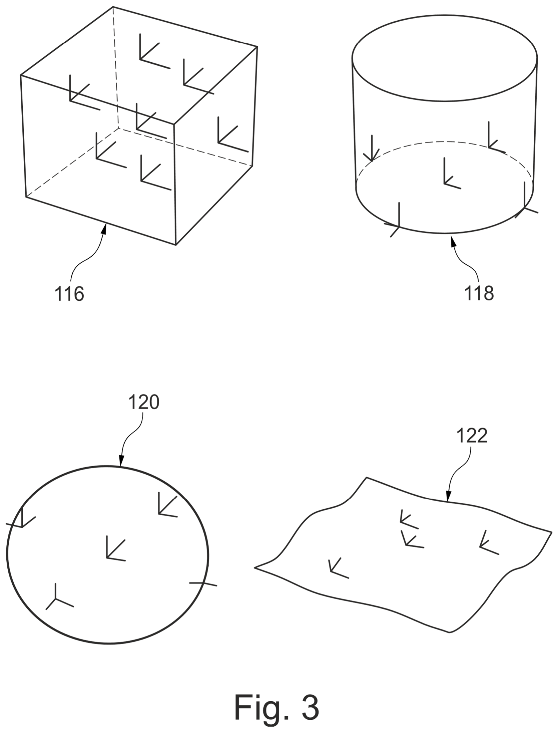

Fig. 3 zeigt verschiedene Koordinatensysteme, in welchen die probabilistischen Dynamiken 108, 110, 112 repräsentiert werden können. Kartesische Koordinaten 116 können für eine Vielzahl von Aufgaben verwendet werden, Zylinderkoordinaten 118 für rotationssymetrische Aufgaben und Kugelkoordinaten 120 für Aufgaben, bei dem die Orientierung des Roboters bezüglich des Zielpunkts immer gleich ist. Koordinatensysteme auf Meshoberflächen 122 sind vor allem für Aufgaben der Oberflächenbearbeitung wichtig.

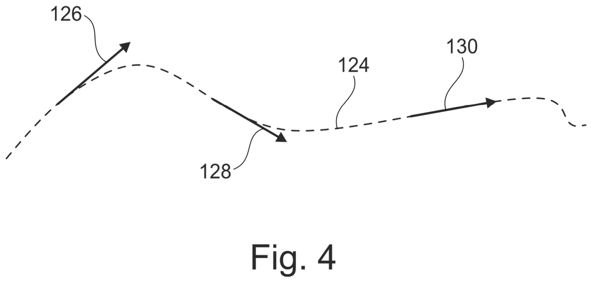

Fig. 4 zeigt eine Automatisierung von positionsbasierten Virtual Fixtures. Für die hier in 2D gestrichelt dargestellte positionsbasierte Fixture 124 wird an der aktuellen Position, hier für drei Fälle dargestellt, der Richtungsvektor 126, 128, 130 extrahiert. Dieser wird mittels desselben Geschwindigkeitsreglers, welcher auch für die Dynamiken (Fig. 1: 104, 106, 108) verwendet wird, eingeregelt und kann somit auch von der Bedienperson 104 überschrieben werden.

Bezugszeichen

| | |
|---|---|
| 100 | Roboter |
| 102 | haptisches Interface |
| 104 | Bedienperson |
| 106 | Arbeitsbereich |
| 108 | probabilistische Dynamik |
| 110 | probabilistische Dynamik |
| 112 | probabilistische Dynamik |
| 114 | Roboterarm |
| 116 | Kartesische Koordinaten |
| 118 | Zylinderkoordinaten |
| 120 | Kugelkoordinaten |
| 122 | Koordinatensystem auf Meshoberfläche |
| 124 | Positionsbasierte Fixture |
| 126 | Richtungsvektor |
| 128 | Richtungsvektor |
| 130 | Richtungsvektor |

**Patentansprüche**

1. Verfahren zum interaktiven kraftgeregelten Kontrollieren eines Roboters (100) unter Verwendung einer probabilistischen geschwindigkeitsbasierten Virtual Fixture, wobei das Verfahren folgende Schritte umfasst: basierend auf Demonstrationsdaten lernen wenigstens eines spezifischen probabilistischen Dynamikmodells; basierend auf dem wenigstens einen spezifischen probabilistischen Dynamikmodell berechnen wenigstens eines probabilistischen Geschwindigkeitsfelds; Verwenden einer Stabilisierungsstrategie mit einem probabilistischen Basis-Geschwindigkeitsfeld; basierend auf dem wenigstens einen probabilistischen Geschwindigkeitsfeld und dem probabilistischen Basis-Geschwindigkeitsfeld berechnen probabilistischer geschwindigkeitsbasierter Dynamen in ihren jeweiligen Koordinatensystemen; Transformieren der probabilistischen geschwindigkeitsbasierten Dynamen in eine gemeinsame Darstellung; in der gemeinsamen Darstellung Fusionieren der transformierten probabilistischen geschwindigkeitsbasierten Dynamen zu einer resultierenden Dyname, Anwenden der resultierenden Dyname auf den Roboter (100).

2. Verfahren nach Anspruch 1, **dadurch gekennzeichnet, dass** die Demonstrationsdaten eine spezifische Aufgabe in einem spezifischen Arbeitsraumbereich, spezifische Zielkoordinaten, spezifische Objekte und/oder objektspezifische Koordinatensysteme umfassen.

3. Verfahren nach wenigstens einem der vorhergehenden Ansprüche, **dadurch gekennzeichnet, dass** das wenigstens eine spezifische probabilistische Dynamikmodelle nicht-parametrisch gelernt wird, insbesondere basierend auf Gaußschen Prozessen oder Kernelized Movment Primitives.

4. Verfahren nach wenigstens einem der vorhergehenden Ansprüche, **dadurch gekennzeichnet, dass** das wenigstens eine probabilistische Geschwindigkeitsfeld basierend auf aktuellen Endeffektorposen berechnete Sollgeschwindigkeitsvektoren und zugehörige Unsicherheitsschätzungen umfasst.

5. Verfahren nach wenigstens einem der vorhergehenden Ansprüche, **dadurch gekennzeichnet, dass** das probabilistische Basis-Geschwindigkeitsfeld Basisgeschwindigkeitsvektoren in Richtung einer nächstgelegenen Pose und eine konstante Unsicherheitsschätzung zurückgibt.

6. Verfahren nach wenigstens einem der vorhergehenden Ansprüche, **dadurch gekennzeichnet, dass** zum Berechnen der probabilistischen geschwindigkeitsbasierten Dynamen ein proportionales Regelgesetz verwendet wird.

7. Verfahren nach wenigstens einem der vorhergehenden Ansprüche, **dadurch gekennzeichnet, dass** zur gemeinsamen Darstellung und Fusion die geschwindigkeitsbasierten Dynamen über jeweilige Tangentenräume zu kartesischen geschwindigkeitsbasierten Dynamen transformiert und die zugehörigen Unsicherheitsschätzungen analog umgerechnet werden.

8. Verfahren nach wenigstens einem der vorhergehenden Ansprüche, **dadurch gekennzeichnet, dass** die transformierten geschwindigkeitsbasierten Dynamen und umgerechneten zugehörigen Unsicherheitsschätzungen mittels eines Product of Experts zu einer resultierenden Dyname fusioniert werden.

9. Verfahren nach wenigstens einem der vorhergehenden Ansprüche, **dadurch gekennzeichnet, dass** die probabilistische geschwindigkeitsbasierte Virtual Fixture mit einer probabilistischen positionsbasierten Trajektorien-Fixture (124) kombiniert wird.

10. Verfahren nach Anspruch 9, **dadurch gekennzeichnet, dass** eine von der probabilistischen positionsbasierten Trajektorien-Fixture (124) ausgegebene positionsbasierte Dyname mit zugehöriger Unsicherheitsschätzung in die gemeinsame Darstellung transformiert und in der gemeinsamen Darstellung mit den transformierten probabilistischen geschwindigkeitsbasierten Dynamen zu einer resultierenden Dyname fusioniert wird.

11. Verfahren nach wenigstens einem der Ansprüche 9 bis 10, **dadurch gekennzeichnet, dass** die probabilistische positionsbasierte Trajektorien-Fixture (124) automatisiert wird.

12. Verfahren nach Anspruch 11, **dadurch gekennzeichnet, dass** zum Automatisieren der probabilistischen positionsbasierten Trajektorien-Fixture (124) eine bevorzugte Richtung entlang der Trajektorie abgeleitet und die probabilistische positionsbasierte Dyname unter Verwendung des proportionales Regelgesetzes berechnet wird.

13. Verfahren nach wenigstens einem der vorhergehenden Ansprüche, **dadurch gekennzeichnet, dass** die probabilistische geschwindigkeitsbasierte Virtual Fixture mit einer probabilistischen bildbasierten Virtual Fixture kombiniert wird.

14. Verfahren nach Anspruch 13, **dadurch gekennzeichnet, dass** eine von der probabilistischen bildbasierten Virtual Fixture ausgegebene bildbasierte Dyname mit zugehöriger Unsicherheitsschätzung in die gemeinsame Darstellung transformiert und in der gemeinsamen Darstellung mit den transformierten probabilistischen geschwindigkeitsbasierten Dynamen zu einer resultierenden Dyname fusioniert wird.

15. Interaktiv kraftgeregelt kontrollierbarer Roboter (100), **dadurch gekennzeichnet, dass** der Roboter (100) zum Ausführen eines Verfahrens nach wenigstens einem der Ansprüche 1 bis 14 ausgelegt und/oder angeordnet ist.

16. Computerprogramm interaktiven kraftgeregelten Kontrollieren eines Roboters (100) unter Verwendung einer probabilistischen geschwindigkeitsbasierten Virtual Fixture, **dadurch gekennzeichnet, dass** das Computerprogramm Programmcodeabschnitte umfasst, mit denen ein Verfahren nach wenigstens einem der Ansprüche 1 bis 14 ausführbar ist, wenn das Computerprogramm auf einer Kontrolleinrichtung des Roboters (100) ausgeführt wird.

Fig. 1

Fig. 2

Fig. 3

Fig. 4

Europäisches
Patentamt

European
Patent Office

Office européen
des brevets

# EUROPÄISCHER RECHERCHENBERICHT

Nummer der Anmeldung

EP 25 20 8923

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Daniel Aarno: "Intention recognition in human machine collaborative systems", <br><br> , <br> 23. März 2007 (2007-03-23), XP055119950, Stockholm <br> ISBN: 978-91-7178-581-7 <br> Gefunden im Internet: <br> URL:http://libris.kb.se/resource/bib/10379962 <br> [gefunden am 2014-05-23] <br> * das ganze Dokument * <br> ----- | 1-16 | INV. <br> B25J9/16 |
| X | Papageorgiou Dimitrios ET AL: "Robotica (201x) c Cambridge University Press 201x doi:xxxx Kinesthetic Guidance Utilizing DMP Synchronization and Assistive Virtual Fixtures for Progressive Automation", Robotica, <br> 1. Januar 2020 (2020-01-01), Seiten 1-20, XP093368328, <br> DOI: 10.1017/S0263574719001437 <br> Gefunden im Internet: <br> URL:https://repository-empedu-rd.ekt.gr/empedu-rd/bitstream/123456789/269/1/Robotica_3rdSubmission.pdf <br> [gefunden am 2026-02-18] <br> * das ganze Dokument * <br> ----- <br> -/-- | 1-16 | |
| | | | RECHERCHIERTE SACHGEBIETE (IPC) <br><br> B25J <br> G05B |

Der vorliegende Recherchenbericht wurde für alle Patentansprüche erstellt

| Recherchenort | Abschlußdatum der Recherche | Prüfer |
|---|---|---|
| Den Haag | 19. Februar 2026 | Abbing, Ralf |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)

Seite 1 von 3

**EUROPÄISCHER RECHERCHENBERICHT**

Europäisches Patentamt
European Patent Office
Office européen des brevets

**Nummer der Anmeldung**

EP 25 20 8923

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SAVERINO M ET AL: "Dynamic movement primitives in robotics: A tutorial survey", THE INTERNATIONAL JOURNAL OF ROBOTICS RESEARCH, [Online] 1. November 2023 (2023-11-01), Seiten 1-43, XP093368336, Sage ISSN: 0278-3649, DOI: 10.1177/02783649231201196 Gefunden im Internet: URL:https://arxiv.org/pdf/2102.03861> [gefunden am 2026-02-18] * das ganze Dokument * ----- | 1-16 | |
| A | RESTREPO SUSANA SANCHEZ ET AL: "Iterative virtual guides programming for human-robot comanipulation", 2017 IEEE INTERNATIONAL CONFERENCE ON ADVANCED INTELLIGENT MECHATRONICS (AIM), IEEE, 3. Juli 2017 (2017-07-03), Seiten 219-226, XP033144321, DOI: 10.1109/AIM.2017.8014021 ISBN: 978-1-5090-5998-0 [gefunden am 2017-08-21] * das ganze Dokument * ----- | 1-16 | **RECHERCHIERTE SACHGEBIETE (IPC)** |
| A | PADALKAR ABHISHEK ET AL: "Guiding Reinforcement Learning with Shared Control Templates", 2023 IEEE INTERNATIONAL CONFERENCE ON ROBOTICS AND AUTOMATION (ICRA), IEEE, 29. Mai 2023 (2023-05-29), Seiten 11531-11537, XP034369357, DOI: 10.1109/ICRA48891.2023.10161058 [gefunden am 2023-07-04] * das ganze Dokument * ----- -/-- | 1-16 | |

Der vorliegende Recherchenbericht wurde für alle Patentansprüche erstellt

| Recherchenort | Abschlußdatum der Recherche | Prüfer |
|---|---|---|
| Den Haag | 19. Februar 2026 | Abbing, Ralf |

EPO FORM 1503 03.82 (P04C03)

Europäisches Patentamt

European Patent Office

Office européen des brevets

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MÜHLBAUER MAXIMILIAN ET AL: "A Probabilistic Approach to Multi-Modal Adaptive Virtual Fixtures", IEEE ROBOTICS AND AUTOMATION LETTERS, Bd. 9, Nr. 6, 1. Juni 2024 (2024-06-01), Seiten 5298-5305, XP093366860, ISSN: 2377-3774, DOI: 10.1109/LRA.2024.3384759 * das ganze Dokument * ----- | 1-16 | |
| A | Mühlbauer Maximilian ET AL: "Mixture of experts on Riemannian manifolds for visual-servoing fixtures", IROS'22 Workshop "Probabilistic Robotics in the Age of Deep Learning", 27. Oktober 2022 (2022-10-27), XP093229079, Gefunden im Internet: URL:https://elib.dlr.de/189970/1/mixture_of_experts_on_riemanni.pdf [gefunden am 2026-02-16] * das ganze Dokument * ----- | 1-16 | |
| A | IREGUI SANTIAGO ET AL: "Reconfigurable Constraint-Based Reactive Framework for Assistive Robotics With Adaptable Levels of Autonomy", IEEE ROBOTICS AND AUTOMATION LETTERS, IEEE, Bd. 6, Nr. 4, 26. Juli 2021 (2021-07-26), Seiten 7397-7405, XP011870180, DOI: 10.1109/LRA.2021.3098950 [gefunden am 2021-08-03] * das ganze Dokument * ----- | 1-16 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 19. Februar 2026 | Abbing, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

# EP 4 729 248 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. PIGNAT** ; **S. CALINON**. Bayesian Gaussian Mixture Model for Robotic Policy Imitation. *IEEE Robotics and Automation Letters*, October 2019, vol. 4, 4452-4458
- **M. KHORAMSHAHI** ; **A. BILLARD**. A dynamical system approach for detection and reaction to human guidance in physical human-robot interaction. *Autonomous Robots*, July 2020, vol. 44, 1411-1429
- **G. RAIOLA** ; **S. S. RESTREPO** ; **P. CHEVALIER** ; **P. RODRIGUEZ-AYERBE** ; **X. LAMY** ; **S. TLIBA** ; **F. STULP**. Co-manipulation with a library of virtual guiding fixtures. *Autonomous Robots*, November 2017, vol. 42, 1037-1051
- **M. S. MÜHLBAUER** ; **F. STULP** ; **A. O. ALBU-SCHÄFFER** ; **J. SILVÉRIO**. Mixture of experts on Riemannian manifolds for visual-servoing fixtures. *2022 IEEE/RSJ International Conference on Intelligent Robots and Systems, Workshop on Probabilistic Robotics in the Age of Deep Learning*, 2022
- **M. MÜHLBAUER** ; **T. HULIN** ; **B. WEBER** ; **S. CALINON** ; **F. STULP** ; **A. ALBU-SCHÄFFER** ; **J. SILVÉRIO**. A probabilistic approach to multi-modal adaptive virtual fixtures. *IEEE Robotics and Automation Letters*, 2024, vol. 9 (6), 5298-5305
- **MÜHLBAUER, M.** ; **HULIN, T.** ; **WEBER, B.** ; **CALINON, S.** ; **STULP, F.** ; **ALBU-SCHÄFFER, A.** ; **SILVÉRIO, J.** A Probabilistic Approach to Multi-Modal Adaptive Virtual Fixtures. *IEEE Robotics and Automation Letters*, 2024
- **S. SCHAAL** ; **J. PETERS** ; **J. NAKANISHI** ; **A. IJSPEERT**. Learning Movement Primitives. *Robotics Research. The Eleventh International Symposium, Berlin*, 2005

- **S. M. KHANSARI-ZADEH** ; **A. BILLARD**. Learning Stable Nonlinear Dynamical Systems With Gaussian Mixture Models. *IEEE Transactions on Robotics*, 2011, vol. 27, 943-957
- **H. C. RAVICHANDAR** ; **I. SALEHI** ; **A. P. DANI**. Learning Partially Contracting Dynamical Systems from Demonstrations.. *CoRL*, 2017
- **V. SINDHWANI** ; **S. TU** ; **M. KHANSARI**. *Learning Contracting Vector Fields For Stable Imitation Learning*, 13 April 2018
- **A. SHUKLA** ; **A. BILLARD**. Augmented-SVM: Automatic space partitioning for combining multiple nonlinear dynamics. *Advances in Neural Information Processing Systems*, 2012
- **B. FICHERA** ; **A. BILLARD**. Linearization and identification of multiple-attractor dynamical systems through Laplacian eigenmaps. *J. Mach. Learn. Res.*, January 2022, vol. 23
- **C. K. I. WILLIAMS** ; **C. E. RASMUSSEN**. Gaussian processes for machine learning. MIT press, 2006, vol. 2
- **Y. HUANG** ; **L. ROZO** ; **J. SILVÉRIO** ; **D. G. CALDWELL**. Kernelized movement primitives. *The International Journal of Robotics Research*, 2019, vol. 38, 833-852
- **K. HAGMANN** ; **A. HELLINGS-KUSS** ; **F. STEIDLE** ; **F. STULP** ; **D. LEIDNER** ; **J. KLODMANN**. Continuous transitions between levels of autonomy based on virtual fixtures for surgical robotic systems. *2024 IEEE/RSJ International Conference on Intelligent Robots and Systems, IROS*, 2024
- **M. MÜHLBAUER** ; **T. HULIN** ; **B. WEBER** ; **S. CALINON** ; **F. STULP** ; **A. ALBU- SCHÄFFER** ; **J. SILVÉRIO**. A probabilistic approach to multi-modal adaptive virtual fixtures. *IEEE Robotics and Automation Letters*, 2024, vol. 9 (6), 5298-5305